# EUROPEAN PATENT SPECIFICATION

(11) **EP 4 503 669 B1**
(45) Date of publication and mention of the grant of the patent: **21.01.2026**
(21) Application number: 23189616.8
(22) Date of filing: 03.08.2023
(51) Int. Cl.: H04W 4/38, H04W 4/70

(54) **METHOD FOR ASSESSING OR DETECTING SENSING-RELATED CAPABILITIES OF A MOBILE COMMUNICATION NETWORK AND/OR FOR PREPARING TO PROVIDE AT LEAST ONE SENSING-RELATED SERVICE BY USING A MOBILE COMMUNICATION NETWORK, SYSTEM OR MOBILE COMMUNICATION NETWORK, SENSING-RELATED NETWORK FUNCTION OR SERVICE, USER EQUIPMENT, PROGRAM AND COMPUTER-READABLE MEDIUM**
VERFAHREN ZUM BEURTEILEN UND ERKENNEN VON SENSING-FUNKTIONALITÄT
RÉSEAU MOBILE, FONCTION OU SERVICE DE RÉSEAU LIÉ À LA DÉTECTION, ÉQUIPEMENT UTILISATEUR ET SUPPORT

(43) Date of publication of application: 05.02.2025
(73) Proprietor: Deutsche Telekom AG, 53113 Bonn (DE)
(72) Inventor: ZIMMERMANN, Gerd, Dr., 64331 Weiterstadt (DE)
(74) Representative: Schwöbel, Thilo K.

(56) References cited:
- WO-A1-2022/133951
- US-A1- 2022 182 161
- US-A1- 2022 287 083

## Description

### BACKGROUND

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies, which are typically organized throughout a country (or a part of or a region within a country) in a repeating pattern of (radio) cells (and associated base station entities) which belong to (or are used by or associated or assigned to) a mobile network operator (MNO).

Wireless sensing technologies have originated from the most widely used sensing technology known as radar (radio detection and ranging), where radio waves are exploited to determine distance, angle, or instantaneous velocity of objects. Nowadays, this principle is exploited for example by lidar (light detection and ranging) systems that are capable of obtaining an image of the environment around a sensor. A lidar system may be either a stand-alone device or integrated in a mobile device or a vehicle.

By means of realizing sensing capabilities in or as part of mobile communication networks, primarily by means of one or a plurality of sensing-capable or sensing-enabled entities or functionalities that are generating and transmitting radiofrequency sensing signals, it is possible to obtain information regarding either transmission channel properties between different stations, especially base station entities or user equipments, and/or regarding objects from where such radiofrequency sensing signals are reflected.

Even though such sensing capabilities are able to procure further information regarding transmission channels and/or objects, especially moving objects, nearby or in the vicinity of the respective sensing-capable or sensing-enabled entities or functionalities, mobile radio technologies (mobile radio access technologies) and radar have developed over decades more or less independently. However, lately the convergence of both technologies is increasing:
Future advances in mobile communications (5G-Advanced and 6G) anticipate that advanced radio sensing functions will become important services of mobile broadband (radio) networks by means of joint communication and sensing, JCaS, and/or by means of integrated sensing and communication, ISaC. Especially, it is contemplated that a combined radio interface is serving both, communication and sensing, i.e. the radio network is used for both communication and sensing purposes at the same time, and radiofrequency resources may be applied in an orthogonal way by separated waveforms, but it is also feasible to use common waveforms for both purposes. More and more, sensing is considered in a broader range, especially referring to the ability of devices (e.g. base station entities or user equipments) to detect and gather information about the environment around them.

However, it is still open how and on which basis the radio resources are shared between communication and sensing services, especially in case that diverse use cases need to be addressed by the cellular mobile broadband networks and/or in case that different sensing data consumers (and/or different consumers of data that are inferred from sensing data) require different levels of quality-of-service regarding sensing information or sensing data.

Documents WO 2022/133951 A1 and US 2022/287083 A1 represent relevant prior art.

### SUMMARY

The invention is defined by the claims.

An object of the present invention is to provide a technically simple, effective and cost-effective solution for assessing or detecting sensing-related capabilities of a mobile communication network and/or for preparing to provide at least one sensing-related service by using a mobile communication network, the mobile communication network comprising at least one sensing-capable or sensing-enabled entity or functionality and at least one sensing-related network function or service as part of the mobile communication network, wherein, in order to perform a sensing-related functionality, the at least one sensing-capable or sensing-enabled entity or functionality transmits a radiofrequency sensing signal and wherein, as a result of the radiofrequency sensing signal being transmitted, a radiofrequency sensing reception signal is received by either the sensing-capable or sensing-enabled entity or functionality or by a further sensing-capable or sensing-enabled entity or functionality or by both the sensing-capable or sensing-enabled entity or functionality and the further sensing-capable or sensing-enabled entity or functionality, wherein by means of the radiofrequency sensing reception signal information about the environment of the sensing-capable or sensing-enabled entities or functionalities is able to be gathered as sensing data. A further object of the present invention is to provide a corresponding system or mobile communication network, a corresponding sensing-related network function or service, a corresponding user equipment, and a corresponding program and computer-readable medium.

The object of the present invention is achieved by a method for assessing or detecting sensing-related capabilities of a mobile communication network and/or for preparing to provide at least one sensing-related service by using a mobile communication network, wherein the mobile communication network comprises
-- at least one sensing-capable or sensing-enabled entity or functionality as part of a radio access network of the mobile communication network, and
-- at least one sensing-related network function or service as part of the mobile communication network,

wherein, in order to perform a sensing-related functionality, the at least one sensing-capable or sensing-enabled entity or functionality transmits a radiofrequency sensing signal and wherein, as a result of the radiofrequency sensing signal being transmitted, a radiofrequency sensing reception signal is received by either the sensing-capable or sensing-enabled entity or functionality or by a further sensing-capable or sensing-enabled entity or functionality or by both the sensing-capable or sensing-enabled entity or functionality and the further sensing-capable or sensing-enabled entity or functionality,
wherein by means of the radiofrequency sensing reception signal information about the environment of the sensing-capable or sensing-enabled entities or functionalities is able to be gathered as sensing data,
wherein, in order to assess or to detect sensing-related capabilities of the mobile communication network and/or in order to prepare to provide at least one sensing-related service, the method comprises the step of detecting and/or collecting, by the at least one sensing-related network function or service, the capabilities of the at least one sensing-capable or sensing-enabled entity or functionality and/or the further sensing-capable or sensing-enabled entity or functionality in view of the capabilities of the mobile communication network to provide defined sensing-related services.

It is thereby advantageously possible, according to the present invention, to provide for a mobile communication network or a mobile radio system that allows an optimized handling of radio resources between traditional communication services and a new service type based on sensing functionalities to be newly incorporated in the mobile radio system, also designated by or known as sensing-as-a-service, SaaS.
Especially, it is advantageously possible according to the present invention to be able to provide definitions of quality-of-service classes for sensing purposes, e.g. based on use case requirements, especially regarding the accuracy of the (determined or detected) position of a sensed object, e.g. along x-y-z axes, the accuracy of the (determined or detected) velocity and/or direction of a sensed object, the sensing resolution (e.g. range, velocity), measurement delay/window, etc. Especially according to the present invention, sensing quality-of-service classes may be able to be determined or described, especially in a manner analogous to - and integrated with the handling of - quality-of-service classes for 5G communication services, especially in a manner such that sensing quality-of-service classes and quality-of-service classes for 5G communication services are able to be handled, e.g. by a scheduler, in a coordinated manner.
It is especially advantageous according to the present invention - by means of assessing or detecting sensing-related capabilities of a mobile communication network and/or for preparing to provide at least one sensing-related service by using such a mobile communication network - to be able to provide the basis for applying sensing in cellular mobile broadband networks for diverse use cases, and, additionally or cumulatively, apply sensing-related functionality in a service-oriented architecture.

For this purpose, according to the present invention, it is assumed that the considered mobile communication network comprises at least one sensing-capable or sensing-enabled entity or functionality (but preferably a plurality of sensing-capable or sensing-enabled entities or functionalities, especially as part of a radio access network of the mobile communication network, wherein especially such sensing-capable or sensing-enabled entities or functionalities are realized as antenna entities or functionalities, especially of or related (or assigned) to base station entities, but also antenna modules or antenna entities or functionalities of (or related or assigned to) user equipments might be used as sensing-capable or sensing-enabled entities or functionalities) and at least one sensing-related network function or service as part of the mobile communication network, especially as part of a core network of the considered mobile communication network. Both in operative use as in a preliminary, or training, use, in order to perform a sensing-related functionality, the at least one sensing-capable or sensing-enabled entity or functionality transmits a radiofrequency sensing signal and, as a result of the radiofrequency sensing signal being transmitted, a radiofrequency sensing reception signal is received by either the sensing-capable or sensing-enabled entity or functionality or by a further sensing-capable or sensing-enabled entity or functionality (or by both the sensing-capable or sensing-enabled entity or functionality and the further sensing-capable or sensing-enabled entity or functionality). By means of the radiofrequency sensing reception signal (comprising necessarily information about the environment of the sensing-capable or sensing-enabled entities or functionalities) such information about the environment is able to be gathered as sensing data (or sensing information) - typically first as raw data, wherein, after subsequent inference steps, sensing data or sensing information are able to be derived.
However, prior to being able to operatively use such sensing functionality of the considered mobile communication network, it is proposed according to the present invention to assess or to detect sensing-related capabilities of the mobile communication network and/or to prepare to provide at least one sensing-related service. This is able to be performed, according to the present invention, by means of detecting and/or collecting, by the at least one sensing-related network function or service, the capabilities of the at least one sensing-capable or sensing-enabled entity or functionality and/or the further sensing-capable or sensing-enabled entity or functionality in view of the capabilities of the mobile communication network to provide defined sensing-related services.

In conventionally known mobile communication networks, several sensing-related use cases are at least contemplated. This includes, e.g., the following:
-- positioning/localization of objects without active communication links;
-- traffic monitoring, control and autonomous transportation, e.g. monitoring movement of vehicles, pedestrians, cyclists, etc., as well as monitoring roads, tram/train tracks, parking garages, etc., providing input for traffic control via traffic lights and autonomous transportation; complement existing car radar concepts and increase the horizon of perception in wide-stretched traffic hot spot scenarios (future autonomous driving); lower altitude air traffic control; 3D environment monitoring and control of flying objects like drones/unmanned aerial vehicles (UAVs) or even airplanes;
-- creation of 3D maps of the environment (e.g., for digital twin applications);
-- smart factory/campus applications, e.g. tracking of machines like automated guided vehicles (AGVs) and robots, or goods; presence/movement of people in a factory hall;
-- smart farming: Similar to smart factory applications adapted to related machines, objects, plants, etc. in that environment;
-- smart home, e.g. intrusion detection, fall detection of elderly or handicapped people, child observation;
-- eHealth: partially similar to smart home applications, but extended to medical applications, e.g., breath/heartbeat/sleep monitoring of patients;
-- gesture recognition e.g., for gaming or remote equipment control/operation;
-- environmental monitoring, e.g. weather/rainfall, flooding events, air pollution and its composition.

According to the present invention, it is advantageously possible that the prerequisites are provided such as to be able to meaningfully provide at least one sensing-related service by means of using the mobile communication network, i.e. wherein at least a part or parts of the mobile communication network help to generate such sensing-related or sensing data.

The actual sensing operation (i.e. operationally conducting sensing operations) typically involves that the sensing-related network function or service, also called sensing function or SF, gets the sensing service requirements inclusive intended area of service and service duration from, typically, a third party application function, AF, or sensing application function, SAF, or by means of (sensing) application function specific to the mobile communication network or to its operator in order to start the sensing (operationally).

Based on the knowledge of the capabilities of the radio access network and/or its parts - especially the capabilities of the sensing-capable or sensing-enabled entities or functionalities, especially including site locations and/or deployment information -, the sensing network function or service triggers a single sensing-capable or sensing-enabled entity or functionality (often a gNB or base station entity) or a plurality or set thereof to start sensing referencing potentially down to the level of transmission-reception-points. The sensing-capable or sensing-enabled entities or functionalities (typically gNBs or base station entities) then consider both the sensing quality-of-service as well as the quality-of-service of running communication service flows to user equipments for radio resource management (scheduling), potentially across different frequency layers. If coordination between several gNBs and/or gNB distributed units (for intra-gNB deployment across different sites) is required, exchange of information is handled via Xn interface between gNBs or via F1 interface between gNB centralized unit and gNB distributed units, and/or can be triggered directly via the sensing-related network function or service (for inter-gNB coordination).

Especially according to the present invention, resource selection may happen by assigning dedicated radiofrequency resources for sensing (dedicated physical resource blocks within an OFDM symbol (orthogonal frequency-division multiplex symbol) or even several OFDM symbols) and/or via the use of joint radiofrequency resources (e.g. dedicated pilot signals that are defined for both communication and sensing purposes; such signals have to be specified/optimized in a way that they are applicable for both targets).

The setting of resources for sensing may happen on demand (e.g. event-triggered), as single shot or in a regular, periodic way, until the sensing-related network function or service stops the sensing service via appropriate signaling to the radio access network. Especially according to the present invention, the weight between communication and sensing services impacting the possible resource allocation should be based on operator's policies triggered by the core network which consider service level agreements, SLAs, with third parties as well as charging aspects compared to communication services.

Another important aspect that has to be considered for SaaS introduction is the impact on system energy efficiency: The radio access network introduces measures to save energy on a larger level (e.g. switching off/on full frequency layers inclusive of power amplifier in the radio unit ((O-)RU, open radio unit), antenna parts (e.g. for Massive MIMO (multiple input multiple output) antennas) or on a shorter level (i.e., micro sleep modes where only parts of radio unit, RU, are shortly (e.g. for a OFDM symbol or a transmission slot) shut down. Those measures have impact also on user equipments and their power consumption. According to the present invention, SaaS integration and radiofrequency resource management is considered in a way that the energy consumption of radio access network nodes still remains on a comparatively low level, but it must be sufficient to achieve the required sensing quality-of-service requirements or quality-of-service class.

Furthermore, in contrast to providing communication services - where feedback channels are available between nodes of the radio access network and user equipments, e.g. via the Uu interface - such bi-directional interworking is not available for sensing, i.e., the radio access network typically does not know in advance which one of a demanded or requested quality-of-service class is currently able to be fulfilled without further actions beforehand.

According to the present invention, it is advantageously possible and preferred that the detection and/or the collection of the capabilities of the sensing-capable or sensing-enabled entities or functionalities comprises starting sensing measurements and/or sensing-related testing operations - especially as part of communication-related operations or actions - based on selected combinations of the sensing-capable or sensing-enabled entities or functionalities and/or their capabilities in order to collect sensing-related testing result data, the sensing-related testing result data especially comprising information about achievable reliabilities and/or accuracies with respect to sensed objects, especially in the environments and/or vicinity of the respective sensing-capable or sensing-enabled entities or functionalities,
wherein the sensing-related testing result data especially comprise sensing-related quality-of-service level data and/or communication-related quality-of-services level data, wherein especially such sensing measurements and/or sensing-related testing operations are triggered by the sensing-related network function or service,
wherein especially such sensing measurements and/or sensing-related testing operations correspond to training measurements,
wherein especially such sensing measurements and/or sensing-related testing operations are conducted in at least one specific training area and/or regarding a training subset of the sensing-capable or sensing-enabled entities or functionalities of the mobile communication network.

It is thereby advantageously possible to easily and effectively implement the inventive method.

According to the present invention, it is furthermore advantageously possible and preferred that a first training phase of such sensing measurements or of such training measurements generates trained model data,
wherein especially the first training phase of such sensing measurements or of such training measurements involves measurements in time intervals of comparatively low communication traffic or comparatively low network load of the mobile communication network,
wherein especially the first training phase of such sensing measurements or of such training measurements results in information about the static environment - especially buildings and/or walls - in the respective training area and/or regarding the training subset of the sensing-capable or sensing-enabled entities or functionalities,
wherein especially, in order to obtain for calibration purposes reliable information about the static environment - especially static reflectors -in the respective training area and/or regarding the training subset of the sensing-capable or sensing-enabled entities or functions, a three-dimensional environmental model and/or a digital twin of the respective portion of the radio network and/or of the static environment is used, especially applying machine-learning and/or artificial intelligence approaches for that training calibration process,
wherein especially required or used radio resources for sensing - especially sets of radio parameters such as frequency bands, bandwidths, antenna and/or beam characteristics according to the capabilities of the sensing-capable or sensing-enabled entities or functionalities involved - are taken into consideration for the creation of the trained model data.

It is thereby advantageously possible to easily and effectively implement the inventive method.

According to the present invention, it is furthermore advantageously possible and preferred that after the first training phase and using the trained model data, a second training phase of such sensing measurements or of such training measurements generates further trained model data,
wherein the second training phase of such sensing measurements or of such training measurements involves measurements focusing on non-static objects, especially nomadic and/or moving objects, in the respective training area and/or regarding the training subset of the sensing-capable or sensing-enabled entities or functionalities, wherein especially the trained model data created in the first training phase is used, in the second training phase, for clutter suppression,
wherein especially the artificial intelligence and/or machine-learning model is trained such that non-static objects and their characteristics are detectable and trackable in the respective training area and/or regarding the training subset of the sensing-capable or sensing-enabled entities or functionalities,
wherein especially required or used radio resources for sensing - especially sets of radio parameters such as frequency bands, bandwidths, antenna and/or beam characteristics according to the capabilities of the sensing-capable or sensing-enabled entities or functionalities involved - are taken into consideration for the creation of the further trained model data.

It is thereby advantageously possible to easily and effectively implement the inventive method.

Furthermore, it is advantageously possible and preferred according to the present invention that - based on the trained model data and/or based on the further trained model data - the sensing-related network function or service is provided with or is able to generate basic map data or a data layer comprising information regarding achievable sensing performance in a plurality of training areas and/or regarding training subsets of the sensing-capable or sensing-enabled entities or functionalities,
wherein the basic map data or data layer especially comprise sensing-related quality-of-service level data,
wherein the basic map data or data layer especially comprises information regarding the required radio resources for sensing in order to obtain a certain reliability and/or accuracy, especially in view of a specific defined use case.

It is thereby advantageously possible to easily and effectively implement the inventive method.

Furthermore, it is advantageously possible and preferred according to the present invention that the sensing-related network function or service is able to map sensing service requirements to sensing-related quality-of-service classes, especially in order to be communicated to the at least one sensing-capable or sensing-enabled entity or functionality in the radio access network applying the information stored in the basic map data or data layer regarding required radio resources for use case specific sensing purposes, wherein each sensing-related quality-of-service class is described by means of key performance indicators and/or parameters, especially comprising at least one out of the following:
-- sensing service area, especially with an indication of whether this is indoor-related or outdoor-related,
-- confidence level,
-- three-dimensional accuracy of positioning estimate by sensing, especially for a target confidence level,
-- accuracy or velocity estimated by sensing, especially for target confidence level,
-- sensing resolution, especially regarding range, velocity resolution,
-- maximum sensing service latency,
-- sensing refreshing rate,
-- missed detection and/or false alarm rate for object detection.

It is thereby advantageously possible to easily and effectively implement the inventive method.

According to a further preferred embodiment of the present invention, the detection and/or the collection of the capabilities of the sensing-capable or sensing-enabled entities or functionalities comprises an operations and maintenance entity or functionality of the mobile communication network informing the sensing-related network function or service regarding sensing-related capabilities and/or characteristics of the sensing-capable or sensing-enabled entities or functionalities, and/or the sensing-related network function or service directly communicates with the sensing-capable or sensing-enabled entities or functionalities - especially by means of using capability request and/or capability response messages -, especially regarding gNB distributed units and/or transmission-reception-points, and especially regarding at least one out of their respective location, their respective antenna direction, their respective transmission power, their respective receiver sensitivity, their respective beam characteristics, their respective frequency bands, wherein especially
-- the operations and maintenance entity or functionality informing the sensing-related network function or service regarding sensing-related capabilities and/or characteristics and/or
-- the sensing-related network function or service directly communicating with the sensing-capable or sensing-enabled entities or functionalities
   is performed prior to starting the sensing measurements and/or the sensing-related testing operations.

It is thereby advantageously possible to easily and effectively implement the inventive method.

Furthermore, the present invention relates to a system or to a mobile communication network for assessing or detecting sensing-related capabilities of the mobile communication network and/or for preparing to provide at least one sensing-related service by using the mobile communication network, wherein the mobile communication network comprises
-- at least one sensing-capable or sensing-enabled entity or functionality as part of a radio access network of the mobile communication network, and
-- at least one sensing-related network function or service as part of the mobile communication network,

wherein, in order to perform a sensing-related functionality, the at least one sensing-capable or sensing-enabled entity or functionality transmits a radiofrequency sensing signal and wherein, as a result of the radiofrequency sensing signal being transmitted, a radiofrequency sensing reception signal is received by either the sensing-capable or sensing-enabled entity or functionality or by a further sensing-capable or sensing-enabled entity or functionality or by both the sensing-capable or sensing-enabled entity or functionality and the further sensing-capable or sensing-enabled entity or functionality, wherein by means of the radiofrequency sensing reception signal information about the environment of the sensing-capable or sensing-enabled entities or functionalities is able to be gathered as sensing data,
wherein, in order to assess or to detect sensing-related capabilities of the mobile communication network and/or in order to prepare to provide at least one sensing-related service, the system or mobile communication network is configured to detect and/or collect, by the at least one sensing-related network function or service, the capabilities of the at least one sensing-capable or sensing-enabled entity or functionality and/or the further sensing-capable or sensing-enabled entity or functionality in view of the capabilities of the mobile communication network to provide defined sensing-related services.

Furthermore, the present invention relates to a sensing-related network function or service as part of an inventive system or an inventive mobile communication network.

Furthermore, the present invention relates to a user equipment as part of an inventive system or an inventive mobile communication network, or connected thereto.

Additionally, the present invention relates to a program comprising a computer readable program code, which, when executed on a computer and/or on a sensing-capable or sensing-enabled entity or functionality and/or on a sensing-related network function or service and/or in part on a sensing-capable or sensing-enabled entity or functionality and/or in part on a sensing-related network function or service, causes the computer and/or the sensing-capable or sensing-enabled entity or functionality and/or the sensing-related network function or service to perform an inventive method.

Additionally, the present invention relates to a computer-readable medium comprising instructions which when executed on a computer and/or on a sensing-capable or sensing-enabled entity or functionality and/or on a sensing-related network function or service and/or in part on a sensing-capable or sensing-enabled entity or functionality and/or in part on a sensing-related network function or service, causes the computer and/or the sensing-capable or sensing-enabled entity or functionality and/or the sensing-related network function or service to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

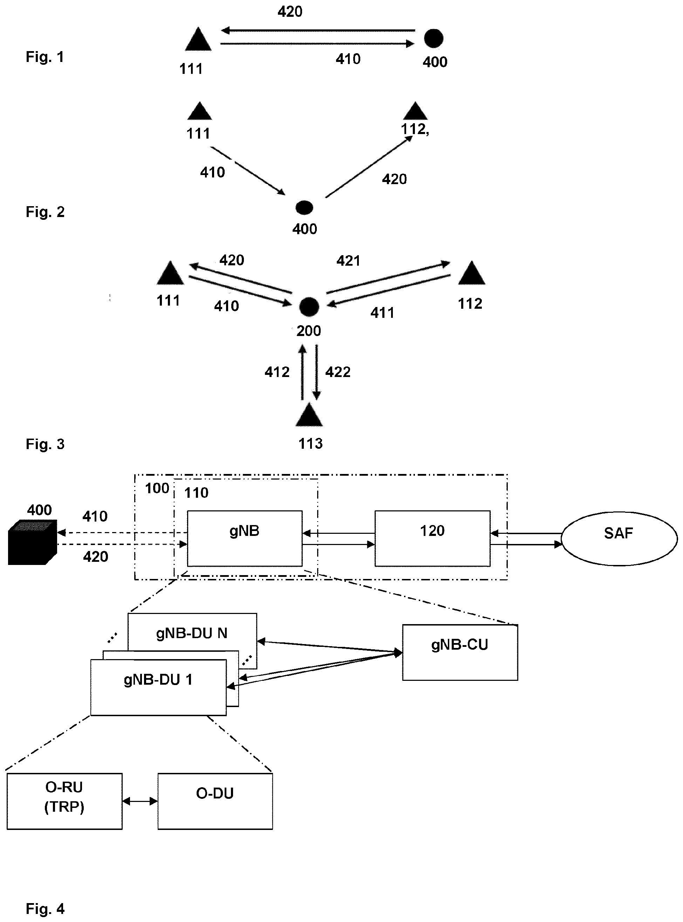

Figure 1 schematically and exemplarily illustrates a base station as a sensing-capable or sensing-enabled entity or functionality which transmits signals (radiofrequency sensing signals) and receives the reflected signals (radiofrequency sensing reception signals), the echoes, of a target in a mono-static operation scenario.
Figure 2 schematically and exemplarily illustrates a bi-static operation scenario, where a target is illuminated (i.e. radiofrequency sensing signals sent) by a first base station entity as a first sensing-capable or sensing-enabled entity or functionality and (radiofrequency sensing reception signals) detected by a second base station entity as a second sensing-capable or sensing-enabled entity or functionality.
Figure 3 schematically and exemplarily illustrates a situation, where a target is illuminated (i.e. radiofrequency sensing signals sent) and detected (via radiofrequency sensing reception signals), respectively, by a first, second and third base station entity as a first, second and third sensing-capable or sensing-enabled entity or functionality.
Figure 4 schematically and exemplarily illustrates a high-level logical architecture for an integrated communication and sensing system based on a 5G system.

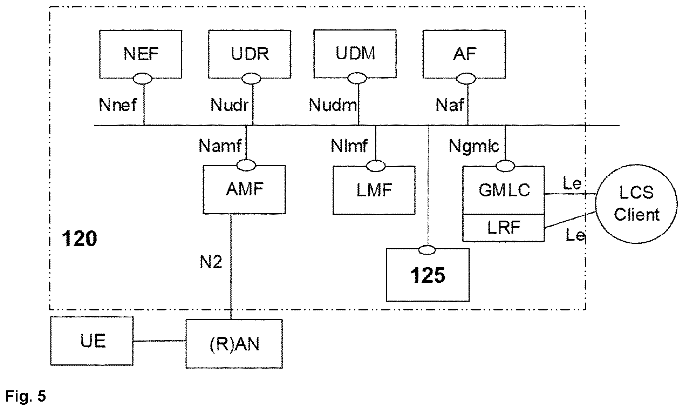

Figure 5 schematically and exemplarily illustrates an example of a core network-related part of an integrated communication and sensing system based on a 5G system.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a base station entity as a (first) sensing-capable or sensing-enabled entity or functionality 111 is schematically and exemplarily represented, which (first) sensing-capable or sensing-enabled entity or functionality 111 transmits signals (radiofrequency sensing signals 410) and receives the reflected signals (as radiofrequency sensing reception signals 420), the echoes, of a target 400 in a mono-static sensing operation scenario.

In Figure 2, a bi-static operation scenario is schematically and exemplarily shown, where a target 400 is illuminated - i.e. radiofrequency sensing signals 410 sent - by a first base station entity as a first sensing-capable or sensing-enabled entity or functionality 111 and radiofrequency sensing reception signals 420 (resulting from the radiofrequency sensing signals 410) detected by a second sensing-capable or sensing-enabled entity or functionality 112, e.g. being a second base station entity, or, alternatively, also a user equipment 20, wherein, of course, in case of the second sensing-capable or sensing-enabled entity or functionality 112 being a user equipment 20, a (non-sensing) communication needs to occur (at a later stage, and not represented in Figure 2) from the user equipment 20 in question to, e.g., the first base station entity 111 (or also to another base station entity, typically within the same mobile communication network).

In Figure 3, a situation is schematically and exemplarily represented, where a target 400 is illuminated (i.e. radiofrequency sensing signals sent) and detected (via radiofrequency sensing reception signals), respectively, by a first, second and third base station entity as first, second and third sensing-capable or sensing-enabled entities or functionalities 111, 112, 113 (i.e. Figure 3 depicts mono-static sensing of three base stations 111, 112, 113). The first sensing-capable or sensing-enabled entity or functionality 111 sends, or transmits, a first radiofrequency sensing signal 410 and receives - as a result thereof - a first radiofrequency sensing reception signal 420. The second sensing-capable or sensing-enabled entity or functionality 112 sends, or transmits, a second radiofrequency sensing signal 411 and receives - as a result thereof - a second radiofrequency sensing reception signal 421. The third sensing-capable or sensing-enabled entity or functionality 113 sends, or transmits, a third radiofrequency sensing signal 412 and receives - as a result thereof - a third radiofrequency sensing reception signal 422. Furthermore, it is conceivable that, especially depending on the respective timing of the first, second and third radiofrequency sensing signals 410, 411, 412, e.g., the first radiofrequency sensing reception signal 420 is a result, especially besides the first radiofrequency sensing signal 410, of at least one of the second and third radiofrequency sensing signals 411, 412, and analogously for the other radiofrequency sensing reception signals 421, 422.

Typically, in mono-static operation - cf. Figure 1 -, the transmitter (of radiofrequency sensing signals 410, 411, 412) and the receiver (of radiofrequency sensing reception signals 420, 421, 422) are co-located in the sensing-capable or sensing-enabled entities or functionalities 111, 112, 113 (i.e., typically base station entities and/or user equipments), respectively, especially with time division duplex (TDD) or full-duplex (FD) capability. The measurements of ToA (Time-of-Arrival), AoA (Angle-of-Arrival), AoD (Angle-of-Departure), and Doppler of each of the resolved (radiofrequency signal propagation) paths correspond to the detection of a target 400, where the location is relative to the coordinate system of the sensing-capable or sensing-enabled entities or functionalities 111, 112, 113 (i.e., typically base station entities and/or user equipments), respectively.

In contrast to mono-static operation, in bi/multi-static operation - cf. Figure 2 and also Figure 3 -, the transmitter (of radiofrequency sensing signals 410, 411, 412) and the receiver (of radiofrequency sensing reception signals 420, 421, 422) are located at different sites, i.e. a (radiofrequency sensing) signal between two sensing-capable or sensing-enabled entities or functionalities such as a base station entity and a user equipment, such signal to the user equipment is able to be used to estimate ToA, AoA, AoD, and Doppler of each of the resolved (radiofrequency signal propagation) paths. In case the two sensing-capable or sensing-enabled entities or functionalities rather correspond to two base station entities, the targets are detected, and their location estimated especially in an absolute joint coordinate system of these base station entities.

In Figure 4, a high-level logical architecture for an integrated communication and sensing system based on a 5G system is schematically shown. For the sake of simplicity, a mono-static sensing operation scenario (cf. Figure 1) is shown also in Figure 4: The base station entity (here designated by means of reference sign gNB) transmits (or emits) - as a sensing-capable or sensing-enabled entity or functionality 111 - a radiofrequency sensing signal 410. Thereafter, reflected radiofrequency signals 420 - reflected from a target 400 - are received by the base station entity 111/gNB. The base station entity gNB is part of a radio access network 110 which in turn is part of the mobile communication network 100 as an example of a sensing-enabled mobile communication network. The mobile communication network 100 furthermore also comprises a core network 120. A sensing application function, SAF, is connected to the mobile communication network 100 (but, typically external to the 5G system) and able to transmit sensing requests to the mobile communication network 100. The base station entity 111 or gNB might be understood as comprising a gNB centralized unit (gNB-CU) as well as one or a plurality of gNB distributed units (denoted by means of reference signs gNB-DU-1 to gNB-DU-N). One of such gNB distributed units might be realized as comprising an open radio unit (O-RU) or transmission-reception-point (TRP) as well as an open-distributed unit (O-DU). Raw sensing measurements or raw measurement data (I/Q samples) are, typically, provided by the open radio units or transmission-reception-points O-RU/TRP, and transferred to the gNB distributed unit base band processing (open distributed unit). A sensing data pre-processing might be realized as part of the radio access network 110, wherein the required type of such pre-processing and related results are typically dependent on the sensing use case (e.g. differentiation between object tracking/identification and sensing for weather reporting needed). Ideally, the sensing pre-processing should happen as early as possible i.e., in the open distributed unit, to save data rate over interfaces towards the core network 120 and to avoid delays. For a split architecture with a centralized gNB centralized unit and distributed gNB distributed units, the gNB centralized unit could be more appropriate to consider joint processing of data from several gNB distributed units. A near-real time radio access network intelligent controller (not shown in Figure 4) might be a further alternative from an open-radio access network architecture perspective due to artificial intelligence/machine-learning functionalities such as xApps, especially according to the O-RAN standardization (or Open-RAN standardization of the O-RAN-Alliance.

Figure 5 schematically and exemplarily illustrates an example of a core network-related part of an integrated communication and sensing system (i.e. a mobile communication network 100) based on a 5G system or 5G core system. The core network 120 comprises a plurality of network functions or services, such as, e.g., a network exposure function, NEF, a unified data repository, UDR, a unified data management, UDM, an application function, AF, an access and mobility management function, AMF, a location management function, LMF, and a gateway mobile location centre/location retrieval function, GMLC/LRF that is interacting with an external location services, LCS, client. In addition to these network functions or services of the core network 120, it is proposed, according to the present invention, to provide a sensing-related network function or service 125 as part of the core network 120. According to a conventionally known manner, the access network 110 or radio access network 110 (designated, in Figure 5, by means of reference sign (R)AN) is connected to or with the core network 120 (especially with the access and mobility management function, AMF, and via an N2 interface or reference point), and the user equipment 20 (designated, in Figure 5, by means of reference sign UE) is connected to the radio access network (R)AN. Further application functions, working on results of the sensing-related network function or service 125 could be directly involved in case of a trusted function or via the network exposure function in the untrusted case (like the sensing application function SAF shown in Figure 4). Typically, requests on sensing services are triggered by sensing application functions SAFs to the sensing-related network function or service 125 based on service requirements. The core network 120 is furthermore, and depending on the use case, responsible for sensing service authorization and fulfilment of data integrity/encryption. The sensing-related network function or service 125 especially corresponds to an extension, especially similar to the location management entity or functionality, and typically performs the processing of sensing data and the preparation of results to be offered to SAFs - especially the processing demand depends on a split of processing stages across the different logical nodes inclusive of radio access network. Furthermore, the sensing-related network function or service 125 especially performs an initiation and parametrization of related sensing measurements in the radio access network based on sensing service requirements from SAFs.

Especially according to the present invention, the detection and/or the collection of the capabilities of the sensing-capable or sensing-enabled entities or functionalities 111, 112 comprises an operations and maintenance entity or functionality of the mobile communication network 100 informing the sensing-related network function or service 125 regarding sensing-related capabilities and/or characteristics of the sensing-capable or sensing-enabled entities or functionalities 111, 112, and/or the sensing-related network function or service 125 directly communicates with the sensing-capable or sensing-enabled entities or functionalities 111 - especially by means of using capability request and/or capability response messages -, especially regarding gNB distributed units and/or transmission-reception-points, and especially regarding at least one out of their respective location, their respective antenna direction, their respective transmission power, their respective reception sensitivity, their respective beam characteristics, their respective frequency bands, wherein especially
-- the operations and maintenance entity or functionality informing the sensing-related network function or service 125 regarding sensing-related capabilities and/or characteristics and/or
-- the sensing-related network function or service 125 directly communicating with the sensing-capable or sensing-enabled entities or functionalities 111 is performed prior to starting the sensing measurements and/or the sensing-related testing operations.

Hence, the operations and maintenance system knows the gNB feasibilities (covering also details of gNB-DUs and TRPs, i.e. TRP location, antenna direction, Tx power, Rx sensitivity, beam characteristics, location, cells/frequency bands, coverage area, ... ) and can inform the sensing-related network function or service (or SF) 125 (i.e. sensing function that is typically located in the core network 120, similar to LMF for location and positioning services (LCS)) about such capabilities; alternatively the SF can get the data from gNBs via appropriate signaling (similar to NRPPa protocol for LCS in 3GPP TS 38.455).

For that purpose, the mobile radio system (RAN plus SF) may learn via Al/ML-based training which accuracy levels etc. might be achieved by interworking of involved TRPs (inter-site distance, antenna/beam characteristics, Tx power, frequency bands, ...). Such Al/ML-based learning approach can e.g. be handled via related xApps in near real-time radio access network intelligent controller, Near-RT RIC, considering the O-RAN architecture.

Especially, the training should initially happen in an offline manner, taking into account large data sets measured in a potential SaaS area during a training phase before initially deploying SaaS.

In addition to offline training, the SF or the gNB may trigger additional sensing measurements (online training) in times when communication services do not cover all resources. Here, the energy efficiency aspect mentioned before has to be considered. The online training is used to continuously improve the AI/ML models used in the related inference engines (reinforcement learning).

For accuracy evaluation and checking of sensing results (object type/shape, movement, etc.) the mobile radio system may also take into account information of UEs (as moving objects) or other sensors (e.g. video cameras). Such information may also be incorporated to improve SaaS results (sensor data fusion), if legal and regulatory demands are fulfilled (e.g. user consent, data privacy, ...).

The involved TRP(s) provide the Rx samples during reception duration for the reflected transmitted sensing signals (mono-/bistatic sensing) to the baseband processing (inside gNB-DU or O-DU in O-RAN context). Dependent on use case, pre-processing stage(s) may be performed already in the RAN (gNB-DU/O-DU or gNB-CU/O-CU or Near-RT RIC) to avoid transferring raw I/Q samples to the core network 120. Pre-processing in CU or Near-RT RIC is preferable in case of centralized deployment covering a larger number of antenna sites. Pre-processed data are then forwarded to SF for final processing.

General processing steps for sensing data are e.g.:
-- Signal correlation and transformation based on RF I/Q samples to get channel transfer functions, Doppler delay functions, etc.
-- Clutter identification (getting a picture of the surrounding of a gNB/TRP, e.g., for digital twinning/radio network planning) and/or clutter suppression to reduce the impact of static objects during search for moving objects.
-- Object detection (incl. position, velocity, shape/size, ...).
-- Object tracking
-- Alarming (e.g. in case of intrusion detection).

According to the present invention, it is advantageously possible to provide for a method for a mobile radio system that allows an optimized handling of radio resources between traditional communication services and a new service type based on sensing functionalities to be newly incorporated in the mobile radio system (Sensing as a Service, or SaaS). Especially, it includes the following steps and/or comprises the following aspects:
-- A method where the operations and maintenance (OAM) entity or functionality of the mobile radio system is informed about the sensing capabilities of an installed RAN node (i.e., a radio base station, e.g. a gNB in 3GPP 5G notation).
-- The capabilities are broken down to lowest granularity, i.e., the gNB may be split in a gNB-CU and one or more gNB-DUs. Each gNB-DU supports a certain number of cells using so called TRPs (transmission/reception points) corresponding to Radio Remote Units (RRUs), wherein, in O-RAN notation, a gNB-CU is called O-CU, a gNB-DU consists of an O-DU and one or several O-RUs which correspond to TRPs.
-- Sensing capabilities especially comprise:
-- Supported frequency bands for sensing
-- Per frequency band: Bandwidth, duplexing scheme (TDD, FDD, FD), supported waveforms (OFDM, ...) and waveform characteristics (e.g. OFDM subcarrier spacing (SCS)), antenna type (x TRX with x = 2, 4, ..., 64, ...), antenna gain (on beam level), max Tx power, ...
-- Per TRP: Location (3D coordinates), 3D antenna/beam directivity, ...
-- Extending the mobile radio system by a new network function, called sensing-related network function or service 125, or SF, for realizing SaaS, wherein such an SF is responsible for:
-- taking demands from (sensing) applications functions ((S)AFs) for realizing SaaS in a certain area (e.g., based on a polygon of coordinates) and with certain KPIs (depends on sensing use case, e.g. location accuracy required for sensed objects, object velocity accuracy for tracking purposes, ...),
-- checking the authorization of (S)Afs for SaaS and the fulfillment of data privacy/integrity/encryption for sensing data,
-- triggering the RAN nodes located within the area demanded by (S)Afs to perform sensing measurements and evaluations based on defined criteria (start/end of the sensing process, one shot or periodic or event-based sensing, required gNBs/TRPs and selected capabilities, ...),
-- providing demanded sensing results back to (S)AFs,
wherein according to present 5G architecture the sensing-related network function or service 125 (or SF) would be part of the 5G Core Network similar to the location management function (LMF) responsible for positioning measurements of the user equipment 20; furthermore, the (S)AF can be a function triggered by a 3rd party (external customer) via a suitable API or can be a network internal function triggered by the MNO for operational sensing services.
-- a method where the SF is informed by the operations and maintenance entity or functionality about sensing capabilities of the RAN nodes in its responsibility area (whole PLMN area or a sub-area of it); alternatively, the SF may get the sensing capabilities from the RAN nodes via dedicated signaling (capability request/response messages). In that case only the IP addresses of relevant RAN nodes have to be provided by the operations and maintenance entity or functionality;
-- a method where the SF triggers the RAN infrastructure in its responsibility area (a single RAN node (bi-static sensing) as well as neighboring nodes and/or TRPs (multi-static sensing), respectively) to start sensing measurements based on selected combinations of the node/TRP capabilities with the purpose to get information about achievable reliabilities/accuracies with respect to sensed objects in the environments of the RAN nodes (initial training):
-- The SF usually will trigger such initial training measurements only in phases when there is low communication traffic on the applied radio resources.
-- The sensing measurement results are used to get in the first training phase an initial information about the static environment (buildings, walls, etc.) in the coverage area of a TRP or a group of TRPs; to recognize dedicated static reflectors in the environment, the use of 3D environmental models (e.g., a 3D city model, taken in combination with a radio network planning or a Digital Twin of the radio network) will be incorporated by corresponding algorithms which should be based on AI/ML approaches, i.e., the trained models will incorporate the static environment.
-- After this first training phase, the SF will initiate a second phase for sensing measurements with focus on non-static (nomadic/moving) objects in the coverage area of a TRP or a group of TRPs incorporating the trained models for the static environment to for clutter suppression; the AI/ML model is trained is a way by different combinations of TRPs and their capabilities that non-static objects and their characteristics are detectable and trackable in the related coverage area, wherein especially this second training phase may not be always needed as it is dependent on the sensing use case. For simple intrusion detection, it may be sufficient to just take the static model and to check if any changes in the environment happen. It is only required for detailed object detection, tracking, and identification.
-- Both training phases allow the SF to get finally a basic map (data layer) of achievable sensing performance (quality of service) in coverage areas of a TRP or a group of TRPs for an applied set of capabilities. That map describes also the required radio resources for sensing to get a certain reliability/accuracy for the intended use case.
-- a method which allows the SF to map use case dependent sensing service requirements raised by the (S)AF to sensing-related QoS classes that can be communicated to the RAN; such mapping - regarding sensing quality-of-service classes
- being similar to that used for 5QI in 5GS (see 3GPP TS 23.501), i.e., each sensing quality-of-service class is described by related KPIs/parameters , e.g. a sensing quality-of-service class comprising: sensing service area (indoor, outdoor, ...), confidence level [%], 3D accuracy of positioning estimate by sensing (for a target confidence level), accuracy of velocity estimate by sensing (for a target confidence level), sensing resolution (range, velocity resolution, max sensing service latency, sensing refreshing rate, missed detection/false alarm rate, wherein not all such KPIs necessarily need to be applicable to all use cases; in this way, each Sensing 5QI (S5QI) - or sensing quality-of-service class - is described by an index and a tuple of KPIs/parameters;
-- a method that allows the MNO to set dedicated policies for sensing use cases that result in different weights for S5QI classes; the weight setting may be performed by the MNO based on SLAs with 3rd parties for different SaaS use cases, and using 5QIs for communication services and weighted S5QIs for sensing services under a common QoS framework allows the RAN scheduler to handle the demand for both service types in a joint way.

Especially, after getting a SaaS trigger by an (S)AF with related service demands the SF is initiating sensing measurements towards the RAN nodes related to the requested sensing service area via dedicated signaling (measurement request message). The signaling will incorporate the demanded S5QI class weighted according to MNO policy. It further provides information to the RAN node(s) about TRPs to be involved and their capabilities to be used to fulfil the S5QI demands on accuracy etc. The RAN node provides feedback in a response message if the sensing service demand can be fulfilled based on available resources.

The RAN scheduler especially incorporates the 5QI values of requested communication service flows together with the S5QI values of requested sensing services to assign RF resources on the PHY layer in a way that the QoS of both service types can be fulfilled. In case of a highly loaded system resulting in limited RF resources, the prioritization between service types may also incorporate ARP (Allocation and Retention Priority) setting according to 3GPP TS 23.501.

The radiofrequency resource scheduling is handled (1) across TRPs within a single gNB-DU/O-DU, (2) across TRPs between gNB-DUs/O-DUs of a single gNB or (3) across TRPs belonging to different gNBs. In case that sensing measurements are triggered by SF as in case (2) and (3), to avoid or mitigate interference impacts the involved RAN schedulers will exchange time/frequency resource information about the sensing scheduling process to align transmission and reception intervals (over F1 interface in case of (2) and over Xn/F1 interfaces in case of (3)).

## Claims

1. Method for assessing or detecting sensing-related capabilities of a mobile communication network (100) and/or for preparing to provide at least one sensing-related service by using a mobile communication network (100),
wherein the mobile communication network (100) comprises
-- at least one sensing-capable or sensing-enabled entity or functionality (111) as part of a radio access network (110) of the mobile communication network (100), and
-- at least one sensing-related network function or service (125) as part of the mobile communication network (100),
wherein, in order to perform a sensing-related functionality, the at least one sensing-capable or sensing-enabled entity or functionality (111) transmits a radiofrequency sensing signal (410) and wherein, as a result of the radiofrequency sensing signal (410) being transmitted, a radiofrequency sensing reception signal (420) is received by either the sensing-capable or sensing-enabled entity or functionality (111) or by a further sensing-capable or sensing-enabled entity or functionality (112) or by both the sensing-capable or sensing-enabled entity or functionality (111) and the further sensing-capable or sensing-enabled entity or functionality (112), wherein by means of the radiofrequency sensing reception signal (420) information about the environment of the sensing-capable or sensing-enabled entities or functionalities (111, 112) is gathered as sensing data (430),
wherein, in order to assess or to detect sensing-related capabilities of the mobile communication network (100) and/or in order to prepare to provide at least one sensing-related service, the method comprises the step of detecting and/or collecting, by the at least one sensing-related network function or service (125), the capabilities of the at least one sensing-capable or sensing-enabled entity or functionality (111) and/or the further sensing-capable or sensing-enabled entity or functionality (112) in view of the capabilities of the mobile communication network (100) to provide defined sensing-related services, wherein the detection and/or the collection of the capabilities of the sensing-capable or sensing-enabled entities or functionalities (111, 112) comprises starting sensing measurements and/or sensing-related testing operations - especially as part of communication-related operations or actions - based on selected combinations of the sensing-capable or sensing-enabled entities or functionalities (111, 112), wherein the method further comprises
-- performing a first training phase of such sensing measurements or of such training measurements that generates trained model data,
wherein the first training phase of such sensing measurements or of such training measurements results in information about the static environment-especially buildings and/or walls - in a respective training area and/or regarding a training subset of the sensing-capable or sensing-enabled entities or functionalities (111, 112),
wherein a three-dimensional environmental model and/or a digital twin of the respective portion of the radio network and/or of the static environment is used, and machine-learning and/or artificial intelligence approaches for that training calibration process are applied, and
-- performing, after the first training phase and using the trained model data, a second training phase of such sensing measurements or of such training measurements that generates further trained model data,
wherein the second training phase of such sensing measurements or of such training measurements involves measurements focusing on non-static objects, especially nomadic and/or moving objects, in the respective training area and/or regarding the training subset of the sensing-capable or sensing-enabled entities or functionalities (111, 112),
wherein the trained model data created in the first training phase is used, in the second training phase, for clutter suppression,
- wherein - based on the trained model data and/or based on the further trained model data - the sensing-related network function or service (125) is provided with or is able to generate basic map data or a data layer comprising information regarding achievable sensing performance in a plurality of training areas and/or regarding training subsets of the sensing-capable or sensing-enabled entities or functionalities (111, 112),
- wherein the basic map data or data layer comprises sensing-related quality-of-service level data,
- wherein the sensing-related network function or service (125) is able to map sensing service requirements to sensing-related quality-of-service classes, especially in order to be communicated to the at least one sensing-capable or sensing-enabled entity or functionality in the radio access network (110) applying the information stored in the basic map data or data layer regarding required radio resources for use case specific sensing purposes.

2. Method according to claim 1, wherein the sensing-related testing result data comprises information about achievable reliabilities and/or accuracies with respect to sensed objects, especially in the environments and/or vicinity of the respective sensing-capable or sensing-enabled entities or functionalities (111, 112), wherein the sensing-related testing result data especially comprise sensing-related quality-of-service level data and/or communication-related quality-of-services level data,
wherein especially such sensing measurements and/or sensing-related testing operations are triggered by the sensing-related network function or service (125), wherein especially such sensing measurements and/or sensing-related testing operations correspond to training measurements,
wherein especially such sensing measurements and/or sensing-related testing operations are conducted in at least one specific training area and/or regarding a training subset of the sensing-capable or sensing-enabled entities or functionalities (111, 112) of the mobile communication network (100).

3. Method according to one of the preceding claims, wherein the first training phase of such sensing measurements or of such training measurements involves measurements in time intervals of comparatively low traffic or comparatively low network load of the mobile communication network (100),
wherein especially, in order to obtain for calibration purposes reliable information about the static environment - especially static reflectors -in the respective training area and/or regarding the training subset of the sensing-capable or sensing-enabled entities or functions (111, 112), wherein especially required or used radio resources for sensing - especially sets of radio parameters such as frequency bands, bandwidths, antenna and/or beam characteristics according to the capabilities of the sensing-capable or sensing-enabled entities or functionalities (111, 112) involved - are taken into consideration for the creation of the trained model data.

4. Method according to one of the preceding claims, wherein especially the artificial intelligence and/or machine-learning model is trained such that non-static objects and their characteristics are detectable and trackable in the respective training area and/or regarding the training subset of the sensing-capable or sensing-enabled entities or functionalities (111, 112),
wherein especially required or used radio resources for sensing - especially sets of radio parameters such as frequency bands, bandwidths, antenna and/or beam characteristics according to the capabilities of the sensing-capable or sensing-enabled entities or functionalities (111, 112) involved - are taken into consideration for the creation of the further trained model data.

5. Method according to one of the preceding claims, wherein the basic map data or data layer comprises communication-related quality-of-services level data, wherein the basic map data or data layer especially comprises information regarding the required radio resources for sensing in order to obtain a certain reliability and/or accuracy, especially in view of a specific defined use case.

6. Method according to one of the preceding claims, wherein each sensing-related quality-of-service class is described by means of key performance indicators and/or parameters, especially comprising at least one out of the following:
-- sensing service area, especially with an indication of whether this is indoor-related or outdoor-related,
-- confidence level,
-- three-dimensional accuracy of positioning estimate by sensing, especially for a target confidence level,
-- accuracy or velocity estimated by sensing, especially for target confidence level,
-- sensing resolution, especially regarding range, velocity resolution,
-- maximum sensing service latency,
-- sensing refreshing rate,
-- missed detection and/or false alarm rate for object detection.

7. Method according to one of the preceding claims, wherein the detection and/or the collection of the capabilities of the sensing-capable or sensing-enabled entities or functionalities (111, 112) comprises an operations and maintenance entity or functionality of the mobile communication network (100) informing the sensing-related network function or service (125) regarding sensing-related capabilities and/or characteristics of the sensing-capable or sensing-enabled entities or functionalities (111, 112),
and/or the sensing-related network function or service (125) directly communicates with the sensing-capable or sensing-enabled entities or functionalities (111) - especially by means of using capability request and/or capability response messages -, especially regarding gNB distributed units and/or transmission-reception-points, and especially regarding at least one out of their respective location, their respective antenna direction, their respective transmission power, their respective reception sensitivity, their respective beam characteristics, their respective frequency bands,
wherein especially
-- the operations and maintenance entity or functionality informing the sensing-related network function or service (125) regarding sensing-related capabilities and/or characteristics and/or
-- the sensing-related network function or service (125) directly communicating with the sensing-capable or sensing-enabled entities or functionalities (111) is performed prior to starting the sensing measurements and/or the sensing-related testing operations.

8. System or mobile communication network (100) for assessing or detecting sensing-related capabilities of the mobile communication network (100) and/or for preparing to provide at least one sensing-related service by using the mobile communication network (100),
wherein the mobile communication network (100) comprises
-- at least one sensing-capable or sensing-enabled entity or functionality (111) as part of a radio access network (110) of the mobile communication network (100), and
-- at least one sensing-related network function or service (125) as part of the mobile communication network (100),
wherein, in order to perform a sensing-related functionality, the at least one sensing-capable or sensing-enabled entity or functionality (111) transmits a radiofrequency sensing signal (410) and wherein, as a result of the radiofrequency sensing signal (410) being transmitted, a radiofrequency sensing reception signal (420) is received by either the sensing-capable or sensing-enabled entity or functionality (111) or by a further sensing-capable or sensing-enabled entity or functionality (112) or by both the sensing-capable or sensing-enabled entity or functionality (111) and the further sensing-capable or sensing-enabled entity or functionality (112), wherein by means of the radiofrequency sensing reception signal (420) information about the environment of the sensing-capable or sensing-enabled entities or functionalities (111, 112) is gathered as sensing data (430),
wherein, in order to assess or to detect sensing-related capabilities of the mobile communication network (100) and/or in order to prepare to provide at least one sensing-related service, the system or mobile communication network (100) is configured to detect and/or collect, by the at least one sensing-related network function or service (125), the capabilities of the at least one sensing-capable or sensing-enabled entity or functionality (111) and/or the further sensing-capable or sensing-enabled entity or functionality (112) in view of the capabilities of the mobile communication network (100) to provide defined sensing-related services, wherein the detection and/or the collection of the capabilities of the sensing-capable or sensing-enabled entities or functionalities (111, 112) comprises starting sensing measurements and/or sensing-related testing operations - especially as part of communication-related operations or actions - based on selected combinations of the sensing-capable or sensing-enabled entities or functionalities (111, 112), wherein the system or mobile communication network (100) is configured
-- to perform a first training phase of such sensing measurements or of such training measurements that generates trained model data
wherein the first training phase of such sensing measurements or of such training measurements results in information about the static environment-especially buildings and/or walls - in a respective training area and/or regarding a training subset of the sensing-capable or sensing-enabled entities or functionalities (111, 112),
wherein a three-dimensional environmental model and/or a digital twin of the respective portion of the radio network and/or of the static environment is used, and machine-learning and/or artificial intelligence approaches for that training calibration process are applied, and
-- to perform, after the first training phase and using the trained model data, a second training phase of such sensing measurements or of such training measurements that generates further trained model data,
wherein the second training phase of such sensing measurements or of such training measurements involves measurements focusing on non-static objects, especially nomadic and/or moving objects, in the respective training area and/or regarding the training subset of the sensing-capable or sensing-enabled entities or functionalities (111, 112),
wherein the trained model data created in the first training phase is used, in the second training phase, for clutter suppression,
- wherein - based on the trained model data and/or based on the further trained model data - the sensing-related network function or service (125) is provided with or is able to generate basic map data or a data layer comprising information regarding achievable sensing performance in a plurality of training areas and/or regarding training subsets of the sensing-capable or sensing-enabled entities or functionalities (111, 112),
- wherein the basic map data or data layer comprises sensing-related quality-of-service level data,
- wherein the sensing-related network function or service (125) is able to map sensing service requirements to sensing-related quality-of-service classes, especially in order to be communicated to the at least one sensing-capable or sensing-enabled entity or functionality in the radio access network (110) applying the information stored in the basic map data or data layer regarding required radio resources for use case specific sensing purposes.

9. System or mobile communication network (100) according to claim 8 with a user equipment (20) as part of the system or the mobile communication network (100), wherein the user equipment (20) is especially used as a sensing-capable or sensing-enabled entity or functionality (111, 112) of the mobile communication network (100).

10. Program comprising a computer readable program code, which, when executed on a computer and/or on a sensing-capable or sensing-enabled entity or functionality (111, 112) and/or on a sensing-related network function or service (125) and/or in part on a sensing-capable or sensing-enabled entity or functionality (111, 112) and/or in part on a sensing-related network function or service (125), causes the computer and/or the sensing-capable or sensing-enabled entity or functionality (111, 112) and/or the sensing-related network function or service (125) to perform a method according one of claims 1 to 7.

11. Computer-readable medium comprising instructions which when executed on a computer and/or on a sensing-capable or sensing-enabled entity or functionality (111, 112) and/or on a sensing-related network function or service (125) and/or in part on a sensing-capable or sensing-enabled entity or functionality (111, 112) and/or in part on a sensing-related network function or service (125), causes the computer and/or the sensing-capable or sensing-enabled entity or functionality (111, 112) and/or the sensing-related network function or service (125) to perform a method according to one of claims 1 to 7.

## Patentansprüche

1. Verfahren zur Bewertung oder Erkennung von Sensing-bezogenen Fähigkeiten eines Mobilkommunikationsnetzes (100) und/oder zur Vorbereitung der Bereitstellung mindestens eines Sensing-bezogenen Dienstes unter Verwendung eines Mobilkommunikationsnetzes (100),
wobei das Mobilkommunikationsnetz (100) umfasst
-- mindestens eine Sensing-fähige oder Sensing-aktivierte Einheit oder Funktionalität (111) als Teil eines Funkzugangsnetzes (110) des Mobilkommunikationsnetzes (100), und
**--** mindestens eine Sensing-bezogene Netzwerkfunktion oder einen Dienst (125) als Teil des Mobilkommunikationsnetzes (100),
wobei, um eine Sensing-bezogene Funktionalität auszuführen, die mindestens eine Sensing-fähige oder Sensing-aktivierte Einheit oder Funktionalität (111) ein Radiofrequenz-Sensing-Signal (410) sendet und wobei, als Ergebnis der Übertragung des Radiofrequenz-Sensing-Signals (410), ein Radiofrequenz-Sensing-Empfangssignal (420) entweder von der Sensing-fähigen oder Sensing-aktivierten Einheit oder Funktionalität (111) oder von einer weiteren Sensing-fähigen oder Sensing-aktivierten Einheit oder Funktionalität (112) oder von sowohl der Sensing-fähigen oder Sensing-aktivierten Einheit oder Funktionalität (111) als auch der weiteren Sensing-fähigen oder Sensing-aktivierten Einheit oder Funktionalität (112) empfangen wird, wobei mittels des Radiofrequenz-Sensing-Empfangssignals (420) Informationen über die Umgebung der Sensing-fähigen oder Sensing-aktivierten Einheiten oder Funktionalitäten (111, 112) als Sensing-Daten (430) gesammelt werden, wobei, um Sensing-bezogene Fähigkeiten des Mobilkommunikationsnetzes (100) zu bewerten oder zu erkennen und/oder um sich auf die Bereitstellung mindestens eines Sensing-bezogenen Dienstes vorzubereiten, das Verfahren den Schritt des Erkennens und/oder Sammelns, durch die mindestens eine Sensing-bezogene Netzwerkfunktion oder den Dienst (125), der Fähigkeiten der mindestens einen Sensing-fähigen oder Sensing-aktivierten Einheit oder Funktionalität (111) und/oder der weiteren Sensing-fähigen oder Sensing-aktivierten Einheit oder Funktionalität (112) im Hinblick auf die Fähigkeiten des Mobilkommunikationsnetzes (100), definierte Sensing-bezogene Dienste bereitzustellen, umfasst, wobei das Erkennen und/oder das Sammeln der Fähigkeiten der Sensing-fähigen oder Sensing-aktivierten Einheiten oder Funktionalitäten (111, 112) das Starten von Sensing-Messungen und/oder Sensing-bezogenen Testoperationen - insbesondere als Teil von kommunikationsbezogenen Operationen oder Aktionen - basierend auf ausgewählten Kombinationen der Sensing-fähigen oder Sensing-aktivierten Einheiten oder Funktionalitäten (111, 112) umfasst, wobei das Verfahren ferner umfasst
-- Durchführen einer ersten Trainingsphase solcher Sensing-Messungen oder solcher Trainingsmessungen, die trainierte Modelldaten erzeugt,
wobei die erste Trainingsphase solcher Sensing-Messungen oder solcher Trainingsmessungen zu Informationen über die statische Umgebung - insbesondere Gebäude und/oder Wände - in einem jeweiligen Trainingsbereich und/oder bezüglich einer Trainingsteilmenge der Sensing-fähigen oder Sensing-aktivierten Einheiten oder Funktionalitäten (111, 112) führt,
wobei ein dreidimensionales Umgebungsmodell und/oder ein digitaler Zwilling des jeweiligen Teils des Funknetzes und/oder der statischen Umgebung verwendet wird, und Ansätze des maschinellen Lernens und/oder der künstlichen Intelligenz für diesen Trainingskalibrierungsprozess angewendet werden, und
-- Durchführen, nach der ersten Trainingsphase und unter Verwendung der trainierten Modelldaten, einer zweiten Trainingsphase solcher Sensing-Messungen oder solcher Trainingsmessungen, die weitere trainierte Modelldaten erzeugt,
wobei die zweite Trainingsphase solcher Sensing-Messungen oder solcher Trainingsmessungen Messungen umfasst, die sich auf nicht-statische Objekte, insbesondere nomadische und/oder bewegliche Objekte, im jeweiligen Trainingsbereich und/oder bezüglich der Trainingsteilmenge der Sensing-fähigen oder Sensing-aktivierten Einheiten oder Funktionalitäten (111, 112) konzentrieren,
wobei die in der ersten Trainingsphase erzeugten trainierten Modelldaten in der zweiten Trainingsphase zur Clutter-Unterdrückung verwendet werden,
- wobei - basierend auf den trainierten Modelldaten und/oder basierend auf den weiteren trainierten Modelldaten - die Sensing-bezogene Netzwerkfunktion oder der Dienst (125) mit Basis-Kartendaten oder einer Datenschicht versehen wird oder diese erzeugen kann, die Informationen über erreichbare Sensing-Leistung in einer Vielzahl von Trainingsbereichen und/oder bezüglich Trainingsteilmengen der Sensing-fähigen oder Sensing-aktivierten Einheiten oder Funktionalitäten (111, 112) umfasst,
- wobei die Basis-Kartendaten oder Datenschicht Sensing-bezogene Dienstgüte-Ebenen-Daten umfassen,
- wobei die Sensing-bezogene Netzwerkfunktion oder der Dienst (125) in der Lage ist, Sensing-Dienstanforderungen auf Sensing-bezogene Dienstgüteklassen abzubilden, insbesondere um an die mindestens eine Sensing-fähige oder Sensing-aktivierte Einheit oder Funktionalität im Funkzugangsnetz (110) kommuniziert zu werden, wobei die in den Basis-Kartendaten oder der Datenschicht gespeicherten Informationen bezüglich erforderlicher Funkressourcen für anwendungsfallspezifische Sensing-Zwecke angewendet werden.

2. Verfahren nach Anspruch 1, wobei die Sensing-bezogenen Testergebnisdaten Informationen über erreichbare Zuverlässigkeiten und/oder Genauigkeiten in Bezug auf erfasste Objekte umfassen, insbesondere in den Umgebungen und/oder der Nähe der jeweiligen Sensing-fähigen oder Sensing-aktivierten Einheiten oder Funktionalitäten (111, 112),
wobei die Sensing-bezogenen Testergebnisdaten insbesondere Sensing-bezogene Dienstgüte-Ebenen-Daten und/oder kommunikationsbezogene Dienstgüte-Ebenen-Daten umfassen,
wobei insbesondere solche Sensing-Messungen und/oder Sensing-bezogene Testoperationen durch die Sensing-bezogene Netzwerkfunktion oder den Dienst (125) ausgelöst werden,
wobei insbesondere solche Sensing-Messungen und/oder Sensing-bezogene Testoperationen Trainingsmessungen entsprechen,
wobei insbesondere solche Sensing-Messungen und/oder Sensing-bezogene Testoperationen in mindestens einem spezifischen Trainingsbereich und/oder bezüglich einer Trainingsteilmenge der Sensing-fähigen oder Sensing-aktivierten Einheiten oder Funktionalitäten (111, 112) des Mobilkommunikationsnetzes (100) durchgeführt werden.

3. Verfahren nach einem der vorhergehenden Ansprüche, wobei die erste Trainingsphase solcher Sensing-Messungen oder solcher Trainingsmessungen Messungen in Zeitintervallen mit vergleichsweise niedrigem Verkehrsaufkommen oder vergleichsweise niedriger Netzlast des Mobilkommunikationsnetzes (100) umfasst,
wobei insbesondere, um für Kalibrierungszwecke zuverlässige Informationen über die statische Umgebung - insbesondere statische Reflektoren - im jeweiligen Trainingsbereich und/oder bezüglich der Trainingsteilmenge der Sensing-fähigen oder Sensing-aktivierten Einheiten oder Funktionen (111, 112) zu erhalten, wobei insbesondere erforderliche oder verwendete Funkressourcen für Sensing - insbesondere Sätze von Funkparametern wie Frequenzbänder, Bandbreiten, Antennen- und/oder Strahlcharakteristiken gemäß den Fähigkeiten der beteiligten Sensing-fähigen oder Sensing-aktivierten Einheiten oder Funktionalitäten (111, 112) - für die Erstellung der trainierten Modelldaten berücksichtigt werden.

4. Verfahren nach einem der vorhergehenden Ansprüche, wobei insbesondere das künstliche Intelligenz- und/oder maschinelle Lern-Modell so trainiert wird, dass nicht-statische Objekte und ihre Eigenschaften im jeweiligen Trainingsbereich und/oder bezüglich der Trainingsteilmenge der Sensing-fähigen oder Sensing-aktivierten Einheiten oder Funktionalitäten (111, 112) erkennbar und verfolgbar sind,
wobei insbesondere erforderliche oder verwendete Funkressourcen für Sensing - insbesondere Sätze von Funkparametern wie Frequenzbänder, Bandbreiten, Antennen- und/oder Strahlcharakteristiken gemäß den Fähigkeiten der beteiligten Sensing-fähigen oder Sensing-aktivierten Einheiten oder Funktionalitäten (111, 112)- für die Erstellung der weiteren trainierten Modelldaten berücksichtigt werden.

5. Verfahren nach einem der vorhergehenden Ansprüche, wobei die Basis-Kartendaten oder Datenschicht kommunikationsbezogene Dienstgüte-Ebenen-Daten umfassen,
wobei die Basis-Kartendaten oder Datenschicht insbesondere Informationen bezüglich der erforderlichen Funkressourcen für Sensing umfassen, um eine bestimmte Zuverlässigkeit und/oder Genauigkeit zu erreichen, insbesondere im Hinblick auf einen spezifischen definierten Anwendungsfall.

6. Verfahren nach einem der vorhergehenden Ansprüche, wobei jede Sensing-bezogene Dienstgüte-Klasse mittels Schlüsselleistungsindikatoren und/oder Parametern beschrieben wird, insbesondere umfassend mindestens einen aus den folgenden:
-- Sensing-Dienstbereich, insbesondere mit einer Angabe, ob dieser innenbezogen oder außenbezogen ist,
-- Konfidenzniveau,
-- dreidimensionale Genauigkeit der Positionsschätzung durch Sensing, insbesondere für ein Ziel-Konfidenzniveau,
-- Genauigkeit oder Geschwindigkeit, geschätzt durch Sensing, insbesondere für ein Ziel-Konfidenzniveau,
-- Sensing-Auflösung, insbesondere bezüglich Reichweite, Geschwindigkeitsauflösung,
-- maximale Sensing-Dienstlatenz,
-- Sensing-Aktualisierungsrate,
-- verfehlte Detektion und/oder Falschalarmrate für Objekterkennung.

7. Verfahren nach einem der vorhergehenden Ansprüche, wobei das Erkennen und/oder das Sammeln der Fähigkeiten der Sensing-fähigen oder Sensing-aktivierten Einheiten oder Funktionalitäten (111, 112) umfasst, dass eine Betriebs- und Wartungseinheit oder Funktionalität des Mobilkommunikationsnetzes (100) die Sensing-bezogene Netzwerkfunktion oder den Dienst (125) über Sensing-bezogene Fähigkeiten und/oder Eigenschaften der Sensing-fähigen oder Sensing-aktivierten Einheiten oder Funktionalitäten (111, 112) informiert,
und/oder die Sensing-bezogene Netzwerkfunktion oder der Dienst (125) direkt mit den Sensing-fähigen oder Sensing-aktivierten Einheiten oder Funktionalitäten (111) kommuniziert
- insbesondere mittels Verwendung von Fähigkeitsanfrage- und/oder Fähigkeitsantwort-Nachrichten -, insbesondere bezüglich gNB-verteilter Einheiten und/oder Sende-Empfangspunkte, und insbesondere bezüglich mindestens eines aus ihrem jeweiligen Standort, ihrer jeweiligen Antennenrichtung, ihrer jeweiligen Sendeleistung, ihrer jeweiligen Empfangsempfindlichkeit, ihren jeweiligen Strahlcharakteristiken, ihren jeweiligen Frequenzbändern,
wobei insbesondere
-- die Betriebs- und Wartungseinheit oder Funktionalität, die die Sensing-bezogene Netzwerkfunktion oder den Dienst (125) über Sensing-bezogene Fähigkeiten und/oder Eigenschaften informiert und/oder
-- die Sensing-bezogene Netzwerkfunktion oder der Dienst (125), der direkt mit den Sensing-fähigen oder Sensing-aktivierten Einheiten oder Funktionalitäten (111) kommuniziert vor dem Start der Sensing-Messungen und/oder der Sensing-bezogenen Testoperationen durchgeführt wird.

8. System oder Mobilkommunikationsnetz (100) zur Bewertung oder Erkennung von Sensing-bezogenen Fähigkeiten des Mobilkommunikationsnetzes (100) und/oder zur Vorbereitung der Bereitstellung mindestens eines Sensing-bezogenen Dienstes unter Verwendung des Mobilkommunikationsnetzes (100),
wobei das Mobilkommunikationsnetz (100) umfasst
-- mindestens eine Sensing-fähige oder Sensing-aktivierte Einheit oder Funktionalität (111) als Teil eines Funkzugangsnetzes (110) des Mobilkommunikationsnetzes (100), und
**--** mindestens eine Sensing-bezogene Netzwerkfunktion oder einen Dienst (125) als Teil des Mobilkommunikationsnetzes (100),
wobei, um eine Sensing-bezogene Funktionalität auszuführen, die mindestens eine Sensing-fähige oder Sensing-aktivierte Einheit oder Funktionalität (111) ein Radiofrequenz-Sensing-Signal (410) sendet und wobei, als Ergebnis der Übertragung des Radiofrequenz-Sensing-Signals (410), ein Radiofrequenz-Sensing-Empfangssignal (420) entweder von der Sensing-fähigen oder Sensing-aktivierten Einheit oder Funktionalität (111) oder von einer weiteren Sensing-fähigen oder Sensing-aktivierten Einheit oder Funktionalität (112) oder von sowohl der Sensing-fähigen oder Sensing-aktivierten Einheit oder Funktionalität (111) als auch der weiteren Sensing-fähigen oder Sensing-aktivierten Einheit oder Funktionalität (112) empfangen wird, wobei mittels des Radiofrequenz-Sensing-Empfangssignals (420) Informationen über die Umgebung der Sensing-fähigen oder Sensing-aktivierten Einheiten oder Funktionalitäten (111, 112) als Sensing-Daten (430) gesammelt werden, wobei, um Sensing-bezogene Fähigkeiten des Mobilkommunikationsnetzes (100) zu bewerten oder zu erkennen und/oder um sich auf die Bereitstellung mindestens eines Sensing-bezogenen Dienstes vorzubereiten, das System oder Mobilkommunikationsnetz (100) dazu konfiguriert ist, durch die mindestens eine Sensing-bezogene Netzwerkfunktion oder den Dienst (125) die Fähigkeiten der mindestens einen Sensing-fähigen oder Sensing-aktivierten Einheit oder Funktionalität (111) und/oder der weiteren Sensing-fähigen oder Sensing-aktivierten Einheit oder Funktionalität (112) im Hinblick auf die Fähigkeiten des Mobilkommunikationsnetzes (100), definierte Sensing-bezogene Dienste bereitzustellen, zu erkennen und/oder zu sammeln, wobei das Erkennen und/oder das Sammeln der Fähigkeiten der Sensing-fähigen oder Sensing-aktivierten Einheiten oder Funktionalitäten (111, 112) das Starten von Sensing-Messungen und/oder Sensing-bezogenen Testoperationen - insbesondere als Teil von kommunikationsbezogenen Operationen oder Aktionen - basierend auf ausgewählten Kombinationen der Sensing-fähigen oder Sensing-aktivierten Einheiten oder Funktionalitäten (111, 112) umfasst, wobei das System oder Mobilkommunikationsnetz (100) dazu konfiguriert ist
-- eine erste Trainingsphase solcher Sensing-Messungen oder solcher Trainingsmessungen durchzuführen, die trainierte Modelldaten erzeugt
wobei die erste Trainingsphase solcher Sensing-Messungen oder solcher Trainingsmessungen zu Informationen über die statische Umgebung - insbesondere Gebäude und/oder Wände - in einem jeweiligen Trainingsbereich und/oder bezüglich einer Trainingsteilmenge der Sensing-fähigen oder Sensing-aktivierten Einheiten oder Funktionalitäten (111, 112) führt,
wobei ein dreidimensionales Umgebungsmodell und/oder ein digitaler Zwilling des jeweiligen Teils des Funknetzes und/oder der statischen Umgebung verwendet wird, und Ansätze des maschinellen Lernens und/oder der künstlichen Intelligenz für diesen Trainingskalibrierungsprozess angewendet werden, und
-- nach der ersten Trainingsphase und unter Verwendung der trainierten Modelldaten, eine zweite Trainingsphase solcher Sensing-Messungen oder solcher Trainingsmessungen durchzuführen, die weitere trainierte Modelldaten erzeugt,
wobei die zweite Trainingsphase solcher Sensing-Messungen oder solcher Trainingsmessungen Messungen umfasst, die sich auf nicht-statische Objekte, insbesondere nomadische und/oder bewegliche Objekte, im jeweiligen Trainingsbereich und/oder bezüglich der Trainingsteilmenge der Sensing-fähigen oder Sensing-aktivierten Einheiten oder Funktionalitäten (111, 112) konzentrieren,
wobei die in der ersten Trainingsphase erzeugten trainierten Modelldaten in der zweiten Trainingsphase zur Clutter-Unterdrückung verwendet werden,
- wobei - basierend auf den trainierten Modelldaten und/oder basierend auf den weiteren trainierten Modelldaten - die Sensing-bezogene Netzwerkfunktion oder der Dienst (125) mit Basis-Kartendaten oder einer Datenschicht versehen wird oder diese erzeugen kann, die Informationen über erreichbare Sensing-Leistung in einer Vielzahl von Trainingsbereichen und/oder bezüglich Trainingsteilmengen der Sensing-fähigen oder Sensing-aktivierten Einheiten oder Funktionalitäten (111, 112) umfasst,
- wobei die Basis-Kartendaten oder Datenschicht Sensing-bezogene Dienstgüte-Ebenen-Daten umfassen,
- wobei die Sensing-bezogene Netzwerkfunktion oder der Dienst (125) in der Lage ist, Sensing-Dienstanforderungen auf Sensing-bezogene Dienstgüteklassen abzubilden, insbesondere um an die mindestens eine Sensing-fähige oder Sensing-aktivierte Einheit oder Funktionalität im Funkzugangsnetz (110) kommuniziert zu werden, wobei die in den Basis-Kartendaten oder der Datenschicht gespeicherten Informationen bezüglich erforderlicher Funkressourcen für anwendungsfallspezifische Sensing-Zwecke angewendet werden.

9. System oder Mobilkommunikationsnetz (100) nach Anspruch 8 mit einem Benutzergerät (20) als Teil des Systems oder des Mobilkommunikationsnetzes (100), wobei das Benutzergerät (20) insbesondere als Sensing-fähige oder Sensing-aktivierte Einheit oder Funktionalität (111, 112) des Mobilkommunikationsnetzes (100) verwendet wird.

10. Programm, umfassend einen computerlesbaren Programmcode, der, wenn er auf einem Computer und/oder auf einer Sensing-fähigen oder Sensing-aktivierten Einheit oder Funktionalität (111, 112) und/oder auf einer Sensing-bezogenen Netzwerkfunktion oder einem Dienst (125) und/oder teilweise auf einer Sensing-fähigen oder Sensing-aktivierten Einheit oder Funktionalität (111, 112) und/oder teilweise auf einer Sensing-bezogenen Netzwerkfunktion oder einem Dienst (125) ausgeführt wird, den Computer und/oder die Sensing-fähige oder Sensing-aktivierte Einheit oder Funktionalität (111, 112) und/oder die Sensing-bezogene Netzwerkfunktion oder den Dienst (125) veranlasst, ein Verfahren nach einem der Ansprüche 1 bis 7 auszuführen.

11. Computerlesbares Medium, umfassend Anweisungen, die, wenn sie auf einem Computer und/oder auf einer Sensing-fähigen oder Sensing-aktivierten Einheit oder Funktionalität (111, 112) und/oder auf einer Sensing-bezogenen Netzwerkfunktion oder einem Dienst (125) und/oder teilweise auf einer Sensing-fähigen oder Sensing-aktivierten Einheit oder Funktionalität (111, 112) und/oder teilweise auf einer Sensing-bezogenen Netzwerkfunktion oder einem Dienst (125) ausgeführt werden, den Computer und/oder die Sensing-fähige oder Sensing-aktivierte Einheit oder Funktionalität (111, 112) und/oder die Sensing-bezogene Netzwerkfunktion oder den Dienst (125) veranlassen, ein Verfahren nach einem der Ansprüche 1 bis 7 auszuführen.

## Revendications

1. Procédé pour évaluer ou détecter les capacités liées à la détection d'un réseau de communication mobile (100) et/ou pour préparer la fourniture d'au moins un service lié à la détection en utilisant un réseau de communication mobile (100),
dans lequel le réseau de communication mobile (100) comprend
**--** au moins une entité capable de détection ou entité activée pour la détection ou fonctionnalité (111) faisant partie d'un réseau d'accès radio (110) du réseau de communication mobile (100), et
-- au moins une fonction réseau liée à la détection ou service (125) faisant partie du réseau de communication mobile (100),
dans lequel, afin d'exécuter une fonctionnalité liée à la détection, la au moins une entité capable de détection ou entité activée pour la détection ou fonctionnalité (111) transmet un signal de détection radiofréquence (410) et dans lequel, en conséquence de la transmission du signal de détection radiofréquence (410), un signal de réception de détection radiofréquence (420) est reçu soit par l'entité capable de détection ou entité activée pour la détection ou fonctionnalité (111) soit par une autre entité capable de détection ou entité activée pour la détection ou fonctionnalité (112) soit par l'entité capable de détection ou entité activée pour la détection ou fonctionnalité (111) et l'autre entité capable de détection ou entité activée pour la détection ou fonctionnalité (112), dans lequel au moyen du signal de réception de détection radiofréquence (420) des informations sur l'environnement des entités capables de détection ou entités activées pour la détection ou fonctionnalités (111, 112) sont collectées en tant que données de détection (430),
dans lequel, afin d'évaluer ou de détecter les capacités liées à la détection du réseau de communication mobile (100) et/ou afin de préparer la fourniture d'au moins un service lié à la détection, le procédé comprend l'étape de détection et/ou de collecte, par la au moins une fonction réseau liée à la détection ou service (125), des capacités de la au moins une entité capable de détection ou entité activée pour la détection ou fonctionnalité (111) et/ou de l'autre entité capable de détection ou entité activée pour la détection ou fonctionnalité (112) en ce qui concerne les capacités du réseau de communication mobile (100) à fournir des services définis liés à la détection, dans lequel la détection et/ou la collecte des capacités des entités capables de détection ou entités activées pour la détection ou fonctionnalités (111, 112) comprend le démarrage de mesures de détection et/ou d'opérations de test liées à la détection - en particulier dans le cadre d'opérations ou d'actions liées à la communication - basées sur des combinaisons sélectionnées des entités capables de détection ou entités activées pour la détection ou fonctionnalités (111, 112), dans lequel le procédé comprend en outre
-- l'exécution d'une première phase d'entraînement de telles mesures de détection ou de telles mesures d'entraînement qui génère des données de modèle entraîné,
dans lequel la première phase d'entraînement de telles mesures de détection ou de telles mesures d'entraînement aboutit à des informations sur l'environnement statique - en particulier les bâtiments et/ou les murs - dans une zone d'entraînement respective et/ou concernant un sous-ensemble d'entraînement des entités capables de détection ou entités activées pour la détection ou fonctionnalités (111, 112),
dans lequel un modèle environnemental tridimensionnel et/ou un jumeau numérique de la partie respective du réseau radio et/ou de l'environnement statique est utilisé, et des approches d'apprentissage automatique et/ou d'intelligence artificielle pour ce processus de calibration d'entraînement sont appliquées, et
-- l'exécution, après la première phase d'entraînement et en utilisant les données de modèle entraîné, d'une deuxième phase d'entraînement de telles mesures de détection ou de telles mesures d'entraînement qui génère d'autres données de modèle entraîné,
dans lequel la deuxième phase d'entraînement de telles mesures de détection ou de telles mesures d'entraînement implique des mesures se concentrant sur les objets non statiques, en particulier les objets nomades et/ou objets mobiles, dans la zone d'entraînement respective et/ou concernant le sous-ensemble d'entraînement des entités capables de détection ou entités activées pour la détection ou fonctionnalités (111, 112),
dans lequel les données de modèle entraîné créées lors de la première phase d'entraînement sont utilisées, dans la deuxième phase d'entraînement, pour la suppression du fouillis,
- dans lequel - sur la base des données de modèle entraîné et/ou sur la base des autres données de modèle entraîné - la fonction réseau liée à la détection ou service (125) est fourni avec ou est capable de générer des données cartographiques de base ou une couche de données comprenant des informations concernant la performance de détection réalisable dans une pluralité de zones d'entraînement et/ou concernant des sous-ensembles d'entraînement des entités capables de détection ou entités activées pour la détection ou fonctionnalités (111, 112),
- dans lequel les données cartographiques de base ou couche de données comprennent des données de niveau de qualité de service liée à la détection,
- dans lequel la fonction réseau liée à la détection ou service (125) est capable de mapper les exigences de service de détection aux classes de qualité de service liées à la détection, en particulier afin d'être communiquées à la au moins une entité capable de détection ou entité activée pour la détection ou fonctionnalité dans le réseau d'accès radio (110) en appliquant les informations stockées dans les données cartographiques de base ou couche de données concernant les ressources radio requises pour des fins de détection spécifiques au cas d'usage.

2. Procédé selon la revendication 1, dans lequel les données de résultats de test liées à la détection comprennent des informations sur les fiabilités et/ou exactitudes réalisables par rapport aux objets détectés, en particulier dans les environnements et/ou à proximité des entités capables de détection ou entités activées pour la détection ou fonctionnalités (111, 112) respectives,
dans lequel les données de résultats de test liées à la détection comprennent en particulier des données de niveau de qualité de service liée à la détection et/ou des données de niveau de qualité de service liée à la communication,
dans lequel en particulier de telles mesures de détection et/ou opérations de test liées à la détection sont déclenchées par la fonction réseau liée à la détection ou service (125),
dans lequel en particulier de telles mesures de détection et/ou opérations de test liées à la détection correspondent à des mesures d'entraînement,
dans lequel en particulier de telles mesures de détection et/ou opérations de test liées à la détection sont effectuées dans au moins une zone d'entraînement spécifique et/ou concernant un sous-ensemble d'entraînement des entités capables de détection ou entités activées pour la détection ou fonctionnalités (111, 112) du réseau de communication mobile (100).

3. Procédé selon l'une des revendications précédentes, dans lequel la première phase d'entraînement de telles mesures de détection ou de telles mesures d'entraînement implique des mesures dans des intervalles de temps de trafic comparativement faible ou de charge réseau comparativement faible du réseau de communication mobile (100),
dans lequel en particulier, afin d'obtenir à des fins de calibration des informations fiables sur l'environnement statique - en particulier les réflecteurs statiques - dans la zone d'entraînement respective et/ou concernant le sous-ensemble d'entraînement des entités capables de détection ou entités activées pour la détection ou fonctions (111, 112), dans lequel en particulier les ressources radio requises ou utilisées pour la détection - en particulier les ensembles de paramètres radio tels que les bandes de fréquences, les bandes passantes, les antennes et/ou les caractéristiques de faisceau selon les capacités des entités capables de détection ou entités activées pour la détection ou fonctionnalités (111, 112) impliquées - sont prises en considération pour la création des données de modèle entraîné.

4. Procédé selon l'une des revendications précédentes, dans lequel en particulier le modèle d'intelligence artificielle et/ou d'apprentissage automatique est entraîné de sorte que les objets non statiques et leurs caractéristiques soient détectables et traçables dans la zone d'entraînement respective et/ou concernant le sous-ensemble d'entraînement des entités capables de détection ou entités activées pour la détection ou fonctionnalités (111, 112), dans lequel en particulier les ressources radio requises ou utilisées pour la détection - en particulier les ensembles de paramètres radio tels que les bandes de fréquences, les bandes passantes, les antennes et/ou les caractéristiques de faisceau selon les capacités des entités capables de détection ou entités activées pour la détection ou fonctionnalités (111, 112) impliquées - sont prises en considération pour la création des autres données de modèle entraîné.

5. Procédé selon l'une des revendications précédentes, dans lequel les données cartographiques de base ou couche de données comprennent des données de niveau de qualité de service liée à la communication,
dans lequel les données cartographiques de base ou couche de données comprennent en particulier des informations concernant les ressources radio requises pour la détection afin d'obtenir une certaine fiabilité et/ou exactitude, en particulier en vue d'un cas d'usage spécifique défini.

6. Procédé selon l'une des revendications précédentes, dans lequel chaque classe de qualité de service liée à la détection est décrite au moyen d'indicateurs clés de performance et/ou de paramètres, comprenant en particulier au moins un parmi les suivants:
-- zone de service de détection, en particulier avec une indication si celle-ci est liée à l'intérieur ou à l'extérieur,
-- niveau de confiance,
-- exactitude tridimensionnelle de l'estimation de positionnement par détection, en particulier pour un niveau de confiance cible,
-- exactitude ou vitesse estimée par détection, en particulier pour un niveau de confiance cible,
-- résolution de détection, en particulier concernant la portée, la résolution de vitesse,
-- latence de service de détection maximale,
-- taux de rafraîchissement de détection,
-- détection manquée et/ou taux de fausses alarmes pour la détection d'objets.

7. Procédé selon l'une des revendications précédentes, dans lequel la détection et/ou la collecte des capacités des entités capables de détection ou entités activées pour la détection ou fonctionnalités (111, 112) comprend une entité d'exploitation et de maintenance ou fonctionnalité du réseau de communication mobile (100) informant la fonction réseau liée à la détection ou service (125) concernant les capacités liées à la détection et/ou les caractéristiques des entités capables de détection ou entités activées pour la détection ou fonctionnalités (111, 112),
et/ou la fonction réseau liée à la détection ou service (125) communique directement avec les entités capables de détection ou entités activées pour la détection ou fonctionnalités (111) - en particulier au moyen de l'utilisation de messages de demande de capacité et/ou de réponse de capacité -, en particulier concernant les unités distribuées gNB et/ou les points de transmission-réception, et en particulier concernant au moins un parmi leur emplacement respectif, leur direction d'antenne respective, leur puissance d'émission respective, leur sensibilité de réception respective, leurs caractéristiques de faisceau respectives, leurs bandes de fréquences respectives,
dans lequel en particulier
-- l'entité d'exploitation et de maintenance ou fonctionnalité informant la fonction réseau liée à la détection ou service (125) concernant les capacités liées à la détection et/ou les caractéristiques et/ou
-- la fonction réseau liée à la détection ou service (125) communiquant directement avec les entités capables de détection ou entités activées pour la détection ou fonctionnalités (111) est effectuée avant de démarrer les mesures de détection et/ou les opérations de test liées à la détection.

8. Système ou réseau de communication mobile (100) pour évaluer ou détecter les capacités liées à la détection du réseau de communication mobile (100) et/ou pour préparer la fourniture d'au moins un service lié à la détection en utilisant le réseau de communication mobile (100),
dans lequel le réseau de communication mobile (100) comprend
**--** au moins une entité capable de détection ou entité activée pour la détection ou fonctionnalité (111) faisant partie d'un réseau d'accès radio (110) du réseau de communication mobile (100), et
-- au moins une fonction réseau liée à la détection ou service (125) faisant partie du réseau de communication mobile (100),
dans lequel, afin d'exécuter une fonctionnalité liée à la détection, la au moins une entité capable de détection ou entité activée pour la détection ou fonctionnalité (111) transmet un signal de détection radiofréquence (410) et dans lequel, en conséquence de la transmission du signal de détection radiofréquence (410), un signal de réception de détection radiofréquence (420) est reçu soit par l'entité capable de détection ou entité activée pour la détection ou fonctionnalité (111) soit par une autre entité capable de détection ou entité activée pour la détection ou fonctionnalité (112) soit par l'entité capable de détection ou entité activée pour la détection ou fonctionnalité (111) et l'autre entité capable de détection ou entité activée pour la détection ou fonctionnalité (112), dans lequel au moyen du signal de réception de détection radiofréquence (420) des informations sur l'environnement des entités capables de détection ou entités activées pour la détection ou fonctionnalités (111, 112) sont collectées en tant que données de détection (430),
dans lequel, afin d'évaluer ou de détecter les capacités liées à la détection du réseau de communication mobile (100) et/ou afin de préparer la fourniture d'au moins un service lié à la détection, le système ou réseau de communication mobile (100) est configuré pour détecter et/ou collecter, par la au moins une fonction réseau liée à la détection ou service (125), les capacités de la au moins une entité capable de détection ou entité activée pour la détection ou fonctionnalité (111) et/ou de l'autre entité capable de détection ou entité activée pour la détection ou fonctionnalité (112) en ce qui concerne les capacités du réseau de communication mobile (100) à fournir des services définis liés à la détection, dans lequel la détection et/ou la collecte des capacités des entités capables de détection ou entités activées pour la détection ou fonctionnalités (111, 112) comprend le démarrage de mesures de détection et/ou d'opérations de test liées à la détection - en particulier dans le cadre d'opérations ou d'actions liées à la communication - basées sur des combinaisons sélectionnées des entités capables de détection ou entités activées pour la détection ou fonctionnalités (111, 112), dans lequel le système ou réseau de communication mobile (100) est configuré
-- pour exécuter une première phase d'entraînement de telles mesures de détection ou de telles mesures d'entraînement qui génère des données de modèle entraîné dans lequel la première phase d'entraînement de telles mesures de détection ou de telles mesures d'entraînement aboutit à des informations sur l'environnement statique - en particulier les bâtiments et/ou les murs - dans une zone d'entraînement respective et/ou concernant un sous-ensemble d'entraînement des entités capables de détection ou entités activées pour la détection ou fonctionnalités (111, 112),
dans lequel un modèle environnemental tridimensionnel et/ou un jumeau numérique de la partie respective du réseau radio et/ou de l'environnement statique est utilisé, et des approches d'apprentissage automatique et/ou d'intelligence artificielle pour ce processus de calibration d'entraînement sont appliquées, et
-- pour exécuter, après la première phase d'entraînement et en utilisant les données de modèle entraîné, une deuxième phase d'entraînement de telles mesures de détection ou de telles mesures d'entraînement qui génère d'autres données de modèle entraîné,
dans lequel la deuxième phase d'entraînement de telles mesures de détection ou de telles mesures d'entraînement implique des mesures se concentrant sur les objets non statiques, en particulier les objets nomades et/ou objets mobiles, dans la zone d'entraînement respective et/ou concernant le sous-ensemble d'entraînement des entités capables de détection ou entités activées pour la détection ou fonctionnalités (111, 112),
dans lequel les données de modèle entraîné créées lors de la première phase d'entraînement sont utilisées, dans la deuxième phase d'entraînement, pour la suppression du fouillis,
- dans lequel - sur la base des données de modèle entraîné et/ou sur la base des autres données de modèle entraîné - la fonction réseau liée à la détection ou service (125) est fourni avec ou est capable de générer des données cartographiques de base ou une couche de données comprenant des informations concernant la performance de détection réalisable dans une pluralité de zones d'entraînement et/ou concernant des sous-ensembles d'entraînement des entités capables de détection ou entités activées pour la détection ou fonctionnalités (111, 112),
- dans lequel les données cartographiques de base ou couche de données comprennent des données de niveau de qualité de service liée à la détection,
- dans lequel la fonction réseau liée à la détection ou service (125) est capable de mapper les exigences de service de détection aux classes de qualité de service liées à la détection, en particulier afin d'être communiquées à la au moins une entité capable de détection ou entité activée pour la détection ou fonctionnalité dans le réseau d'accès radio (110) en appliquant les informations stockées dans les données cartographiques de base ou couche de données concernant les ressources radio requises pour des fins de détection spécifiques au cas d'usage.

9. Système ou réseau de communication mobile (100) selon la revendication 8 avec un équipement utilisateur (20) faisant partie du système ou du réseau de communication mobile (100), dans lequel l'équipement utilisateur (20) est en particulier utilisé comme entité capable de détection ou entité activée pour la détection ou fonctionnalité (111, 112) du réseau de communication mobile (100).

10. Programme comprenant un code de programme lisible par ordinateur qui, lorsqu'il est exécuté sur un ordinateur et/ou sur une entité capable de détection ou entité activée pour la détection ou fonctionnalité (111, 112) et/ou sur une fonction réseau liée à la détection ou service (125) et/ou en partie sur une entité capable de détection ou entité activée pour la détection ou fonctionnalité (111, 112) et/ou en partie sur une fonction réseau liée à la détection ou service (125), amène l'ordinateur et/ou l'entité capable de détection ou entité activée pour la détection ou fonctionnalité (111, 112) et/ou la fonction réseau liée à la détection ou service (125) à exécuter un procédé selon l'une des revendications 1 à 7.

11. Support lisible par ordinateur comprenant des instructions qui, lorsqu'elles sont exécutées sur un ordinateur et/ou sur une entité capable de détection ou entité activée pour la détection ou fonctionnalité (111, 112) et/ou sur une fonction réseau liée à la détection ou service (125) et/ou en partie sur une entité capable de détection ou entité activée pour la détection ou fonctionnalité (111, 112) et/ou en partie sur une fonction réseau liée à la détection ou service (125), amènent l'ordinateur et/ou l'entité capable de détection ou entité activée pour la détection ou fonctionnalité (111, 112) et/ou la fonction réseau liée à la détection ou service (125) à exécuter un procédé selon l'une des revendications 1 à 7.
